# DEMANDE DE BREVET EUROPEEN

(11) **EP 0 969 651 A1**
(43) Date de publication de la demande: **05.01.2000**
(21) Numéro de dépôt: 99401603.8
(22) Date de dépôt: 28.06.1999
(51) Int. Cl.: H04M 11/08, H04N 5/00

(54) **Module interface de communication interactive pour installation multiservice et installation le comportant**

(30) Priorité: 30.06.1998 FR 9808279
(71) Demandeur: Locatel, 78306 Poissy Cédex (FR)
(72) Inventeur: Nardot, Jean Claude, 78306 Poissy Cedex (FR); Akremi, Ramsi, 78306 Poissy Cedex (FR)
(74) Mandataire: Prugneau, Philippe

(57) **Abrégé**

Module interface de communication interactive pour installation de télédistribution multiservice et installation le comportant.

Module interface de communication interactive, pour installation de télédistribution multiservice, et installation dans laquelle des moyens audiovisuels de communication, de type terminaux, sont mis à disposition d'utilisateurs et permettent une commande interactive d'au moins une application par ces utilisateurs.

Chaque module comporte une logique de traitement qui est organisée autour d'un processeur associé à un ensemble de mémoires et qui fait fonction d'unité centrale de traitement et de supervision dans un sous-ensemble, dit grappe, incluant au moins un des terminaux (2) pour la mise en communication de chacun des terminaux de ce sous-ensemble d'une part, par signaux vidéo, avec au moins un sous-ensemble récepteur de programmes de télévision (4) ou serveur vidéo (5, 6) et d'autre part, par signaux numériques, depuis ladite logique de traitement et avec au moins un sous-ensemble serveur (5, 6, 8, 9, 10) local ou distant, au travers d'un réseau local de transmission partagé (11).

## Description

L'invention concerne un module interface de communication interactive pour installation de télédistribution multiservice dans laquelle des moyens audiovisuels de communication sont mis à disposition d'utilisateurs et permettent une commande interactive d'au moins une application par ces utilisateurs tant dans le cadre de l'installation qu'éventuellement à l'extérieur de celle-ci. Elle concerne aussi les installations de télédistribution qui comportent de tels modules.

Il est connu, notamment par un document FR-A-2709905, un système permettant une commande interactive d'applications dans une installation multiservice disposant d'un central téléphonique, d'un serveur pour fournir des programmes télévisuels et d'unités mises à disposition des utilisateurs et associant chacune au moins un téléphone et un téléviseur. Une coopération est prévue entre le central téléphonique, un serveur et un ensemble d'exploitation pour permettre aux usagers d'envoyer des commandes par l'intermédiaire d'un téléphone d'une unité en corrélation avec des informations relatives à un programme télévisuel interactif qui sont alors affichées sur le téléviseur de l'unité.

Il est aussi connu par un document DE-A-9410248, une installation interactive de transmission d'informations permettant de fournir un programme télévisuel spécifiquement à un usager en réponse à une commande directe de cette usager dans le cadre d'une exploitation en temps réel. Cette installation comporte un réseau d'antennes pour la desserte de téléviseurs mis à disposition d'utilisateurs potentiels et une station de tête équipée pour fournir des programmes télévisuels à la demande au travers d'un commutateur de sources de signaux permettant de desservir sélectivement chaque téléviseur. Il est prévu de permettre aux utilisateurs d'effectuer des commandes soit par l'intermédiaire du téléviseur équipé pour transmettre des signaux vers un ordinateur de commande, soit par voie téléphonique vers cet ordinateur.

Du fait de leur organisation matérielle et logicielle, les systèmes correspondant à ceux qui sont évoqués ci-dessus, se prêtent généralement mal aux modifications dues aux évolutions des besoins au cours du temps dans les installations interactives concernées. Les nécessaires adaptations s'avèrent coûteuses et souvent difficiles à réaliser, ce qui conduit à ce que les interventions sur installation se limitent à l'inévitable. Ceci a souvent pour conséquence une exploitation limitée des possibilités existantes et donc une éventuelle insatisfaction tant de l'exploitant que des utilisateurs.

L'invention propose donc un module interface de communication interactive pour installation de télédistribution multiservice dans laquelle des moyens audiovisuels de communication, de type terminaux de communication, sont mis à disposition d'utilisateurs et peuvent permettre des commandes interactives par ces utilisateurs d'au moins une application, tant dans le cadre de l'installation qu'éventuellement à l'extérieur de celle-ci.

Selon une caractéristique de l'invention ce module comporte une logique de traitement qui est organisée autour d'un processeur associé à un ensemble de mémoires et qui fait fonction d'unité centrale de traitement et de supervision dans un sous-ensemble, dit grappe. incluant au moins un des terminaux de communication pour la mise en communication de chacun des terminaux de cette grappe d'une part, par signaux vidéo, avec au moins un sous-ensemble récepteur de programmes de télévision ou serveur vidéo de l'installation et d'autre part par signaux numériques depuis ladite logique de traitement et avec au moins un sous-ensemble serveur local ou distant, au travers d'un réseau local de transmission partagé de l'installation, les transmissions entre le module et les terminaux de cette grappe étant réalisées par l'intermédiaire de canaux dont "n" sont communs à tous, "n" étant un nombre positif ou éventuellement nul, et dont les autres sont dynamiquement affectés aux terminaux de la grappe.

L'invention propose aussi une installation de télédistribution dans laquelle des moyens audiovisuels de communication, de type terminaux, sont mis à disposition d'utilisateurs et permettent une commande interactive d'au moins une application par ces utilisateurs tant dans le cadre de l'installation qu'éventuellement à l'extérieur de celle-ci, ladite installation, comportant au moins un sous-ensemble récepteur de programmes de télévision ou serveur vidéo et un réseau local de transmission numérique auquel est relié au moins un sous-ensemble serveur local ou distant.

Selon une caractéristique de l'invention l'installation comporte des terminaux de communication organisés en grappes et moins un module interface de communication interactive par grappe, ce module incluant une logique de traitement qui est organisée autour d'un processeur associé à un ensemble de mémoires et qui fait fonction d'unité centrale de traitement et de supervision dans une grappe incluant au moins un des terminaux de communication pour la mise en communication de chacun des terminaux de cette grappe d'une part, par signaux vidéo, avec au moins un sous-ensemble récepteur de programmes de télévision ou serveur vidéo de l'installation et/ou d'autre part par signaux numériques depuis ladite logique de traitement et avec au moins un sous-ensemble serveur local ou distant, au travers d'un réseau local de transmission partagé de l'installation, les transmissions entre le module et les terminaux de cette grappe étant réalisées par l'intermédiaire de canaux dont "n" sont communs à tous, "n" étant un nombre positif ou éventuellement nul, et dont les autres sont dynamiquement affectés aux terminaux de la grappe.

L'invention, ses caractéristiques et ses avantages sont précisés dans la description qui suit en liaison avec les figures évoquées ci-dessous.

La figure 1 présente un schéma synoptique d'une installation de télédistribution multiservice incluant des modules interfaces de communication interactive selon l'invention.

La figure 2 présente un schéma synoptique d'une variante de circuit d'interface pour téléviseur d'une installation dotée de modules selon l'invention.

La figure 3 présente un schéma synoptique d'une variante de circuit d'interface pour téléviseur d'une installation dotée de modules selon l'invention

La figure 4 présente un schéma synoptique d'un module interface de communication interactive selon l'invention.

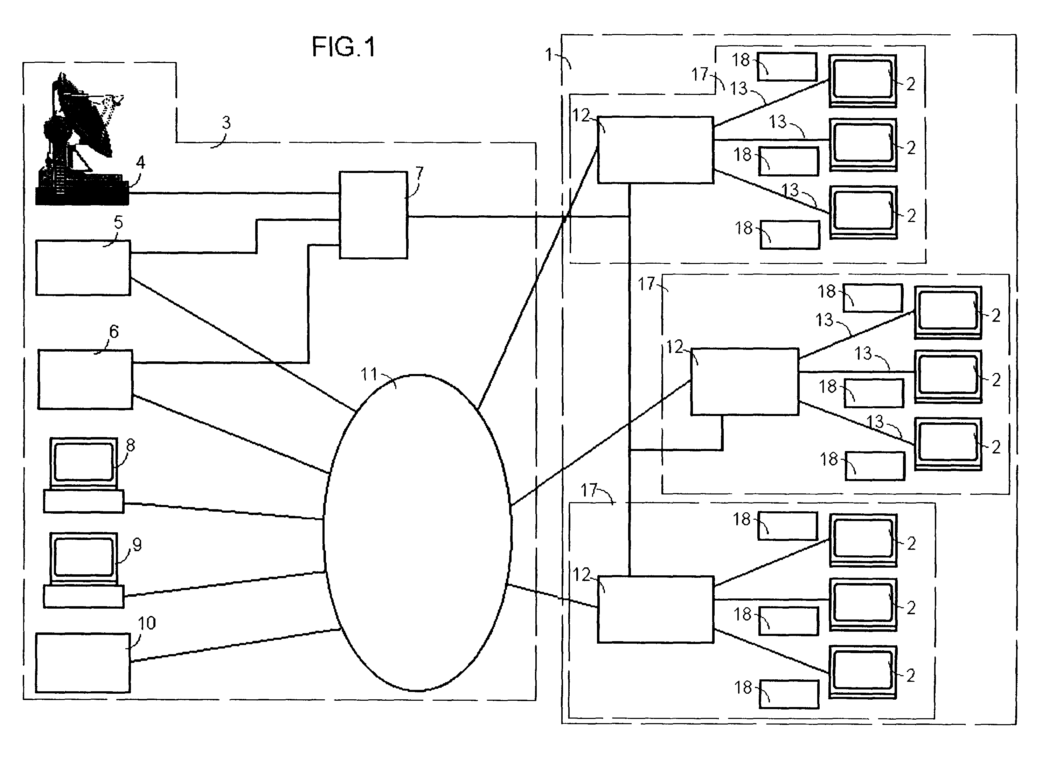

L'installation de télédistribution multiservice schématisée sur la figure 1 comporte un réseau de télédistribution 1 desservant des moyens audiovisuels et /ou informatiques de communication, notamment des terminaux 2, qui sont destinés à être mis à la disposition d'utilisateurs et qui sont ici symbolisés par des téléviseurs. Elle comporte aussi un ensemble de tête de réseau 3 par l'intermédiaire duquel les utilisateurs peuvent être mis en liaison avec différents moyens de distribution ou d'échange d'informations télétransmissibles par les terminaux 2;

Les moyens de distribution que comporte l'ensemble de tête de réseau 3 sont ici symbolisés par un sous-ensemble récepteur de programmes de télévision 4 transmis par voie hertzienne, notamment par satellite comme supposé sur la figure 1, ou éventuellement par câble, un sous-ensemble serveur vidéo 5, un sous-ensemble serveur de jeux vidéo 6, de type rapide, impliquant de forts débits en matière de transmission dans le sens serveur-utilisateur. Un répartiteur 7 est classiquement incorporé dans l'ensemble de tête de réseau 3 entre les moyens de distribution évoqués ci-dessus et le réseau de télédistribution 1 pour une mise en liaison sélective des terminaux de communication 2 avec l'un ou l'autre des sous-ensembles suivant les demandes exprimées par les utilisateurs.

Les moyens d'échange d'informations que comporte l'ensemble de tête de réseau 3 sont ici symbolisés par un sous-ensemble informatique de gestion 8 de l'installation, un sous-ensemble serveur d'accès réseau 9 qui est ici supposé permettre aux utilisateurs d'avoir accès au réseau Internet et un sous-ensemble serveur d'application 10 qui est ici supposé permettre aux utilisateurs d'accéder à des jeux, de type lent, ou à des programmes applicatifs.

Dans l'exemple envisagé, les moyens d'échange d'informations de l'ensemble de tête de réseau 3 sont reliés au réseau de distribution 2 par l'intermédiaire d'un réseau local de transmission 11 à haut débit par exemple un réseau de type Ethernet auquel ces moyens d'échange sont individuellement connectés.

Certains des moyens de distribution et d'échange peuvent être simultanément reliés au répartiteur 7 et au réseau local de transmission 11 de l'installation de télédistribution, pour répondre à des besoins spécifiques en matière de transmission d'informations, comme représenté pour le sous-ensemble serveur vidéo 5 et pour le sous-ensemble serveur de jeux vidéo 6.

Selon l'invention, les terminaux de communication 2 que comporte le réseau de télédistribution 1 sont reliés par grappes 17 à l'ensemble de tête de réseau 3 par l'intermédiaire de modules 12. Chacun de ceux-ci fait fonction d'interface de communication et notamment de communication interactive entre l'ensemble de tête de réseau et les terminaux 2 du sous-ensemble, appelé grappe, qu'il dessert.

Les modules 12 sont individuellement reliés au répartiteur 7 et au réseau local de transmission 11 de l'ensemble de tête de réseau 3 de manière à recevoir l'ensemble des signaux transmis, par l'intermédiaire de ce répartiteur et de ce réseau local, à destination des terminaux 2 auxquels ces modules sont sélectivement reliés par des liaisons bidirectionnelles de transmission 13. Ces liaisons sont ici représentées sous la forme de liaisons point-à-point, il doit être compris que notamment une structure de liaison arborescente est alternativement réalisable pour desservir plusieurs terminaux dans le cadre d'une exploitation partagée temporellement ou fréquentiellement. Chaque module 12 est prévu pour assurer la transmission des signaux qui proviennent de l'ensemble de tête de réseau 3 et qui sont destinés à un terminal 2 relié à lui via une liaison bidirectionnelle de transmission 13. Les transmissions de signaux effectuées en sens inverse pour un terminal 2 sont prises en compte au niveau du module 12 desservant ce terminal et traitées à ce niveau pour transmission sous forme appropriée par l'intermédiaire du réseau local de transmission 11, si besoin est.

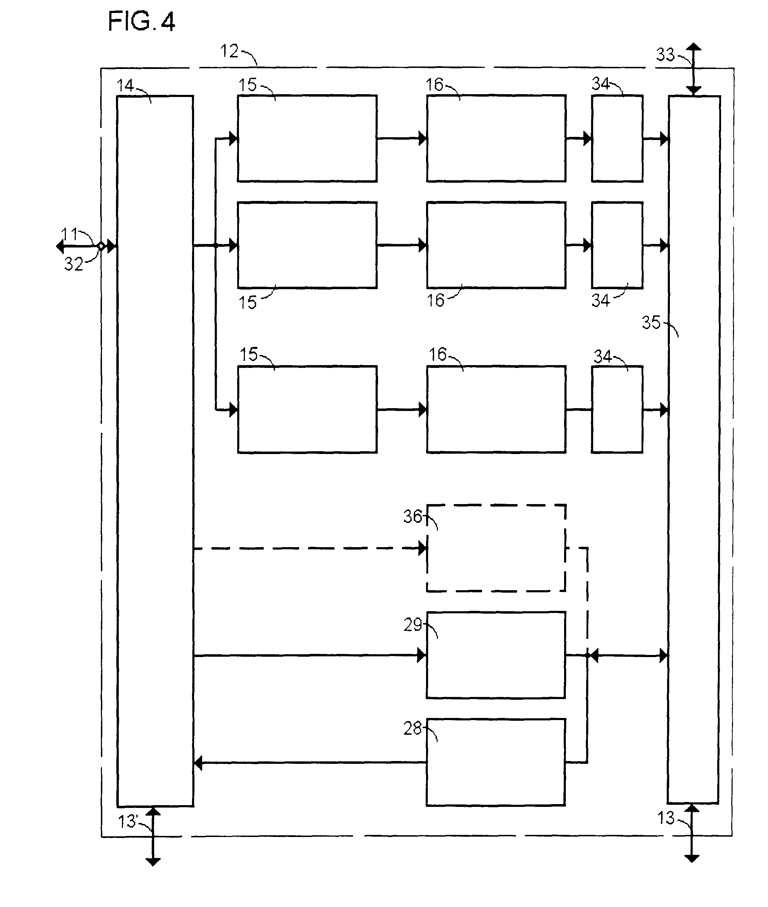

Chaque module 12 comporte une logique de traitement 14, organisée autour d'un processeur associé à un ensemble de mémoires mortes et/ou vives, et au moins un générateur vidéo 15 et un modulateur haute fréquence 16 par terminal 2 desservi par le module, - figure 4 -et pour au moins un terminal.

Selon l'invention, la logique de traitement 14 du module 12 d'une grappe 17, formé par ce module et par les terminaux reliés à lui, est prévue pour permettre une communication sous forme numérique des éléments constitutifs de ce sous-ensemble avec les divers sous-ensembles de la tête de réseau 3 qui sont reliés au réseau local de transmission 11. La logique de traitement 14 de chacun des modules 12 est donc équipée de moyens tant matériels que logiciels pour communiquer avec des moyens correspondants prévus au niveau des sous-ensembles de tête de réseau, tels 5, 6, 7, 9 et 10, avec lesquels les éléments constitutifs de la grappe 17 qui la comporte sont susceptibles de communiquer.

Du fait de l'organisation des terminaux en grappe autour d'un module 12. il est possible de permettre aux terminaux 2 d'une grappe d'exploiter en commun ce qui est reçu ou éventuellement produit au niveau du module 12 qui les dessert. Ceci est particulièrement intéressant lorsqu'au moins une partie des informations relatives à un même programme multimédia est transmise au travers du réseau de transmission 11 pour des utilisateurs dont les terminaux appartiennent à une même grappe puisque ces informations peuvent alors n'être diffusées ou distribuées aux terminaux intéressés qu'à partir du module 12 qui les reçoit, soit alternativement groupées au niveau de ce module pour transmission à un sous-ensemble serveur concerné. Dans une variante de réalisation, il est également prévu qu'un programme multimédia soit mis en oeuvre au niveau d'un module 12 pour distribution à tout ou partie des terminaux desservis par ce module, comme développé plus loin.

D'une manière générale les modules 12 permettent de multiplier les possibilités de transmission vers les terminaux 2 dans une installation. En effet, les transmissions entre les modules et les terminaux que ces modules desservent dans les différentes grappes sont réalisées par l'intermédiaire de canaux dont certains sont communs et dont les autres sont prévus pour pouvoir être dynamiquement affectés aux terminaux, module par module. Ces canaux affectables sont ici prévus identiques dans chacune des grappes, les mêmes fréquences étant exploitées dans toutes les grappes.

Chaque module 12 permet d'affecter aux terminaux reliés à lui un nombre de canaux qui correspond au nombre de canaux qui étaient auparavant à partager entre l'ensemble des terminaux d'une installation. Deux terminaux d'une installation peuvent donc utiliser les mêmes canaux ou plus exactement des canaux correspondants lorsque ces canaux sont ménagés au niveau de liaisons différentes.

Ainsi à titre d'exemple, dans une installation classique il est prévu un nombre donné de par exemple trente canaux susceptibles d'être individuellement affectés à des terminaux, en plus d'un nombre "n" déterminé de canaux communs. Le nombre "n" est un nombre entier positif, il peut éventuellement être nul.

Selon l'invention et en raison de l'insertion de modules 2, il est envisageable de disposer du même nombre de trente canaux individuellement affectables pour les terminaux au niveau de chaque module et en plus des canaux communs, ces derniers étant accessibles à tous et à tout moment, en fonction des besoins.

Ceci est donc particulièrement important puisqu'il est ainsi possible de réaliser économiquement la desserte d'un nombre très important de terminaux 2.

Par ailleurs, les terminaux 2 d'une grappe 17 sont susceptibles de n'être que de simples terminaux d'affichage audiovisuels auxquels sont associés des dispositifs individuels d'interface homme-machine 18 permettant à un utilisateur d'envoyer des commandes sous des formes plus ou moins élaborées en fonction des choix faits par l'exploitant de l'installation de télédistribution en relation avec les besoins des utilisateurs. Les dispositifs d'interface homme-machine 18 sont susceptibles d'être de simples boîtiers de télécommande, lorsque les terminaux sont du type téléviseur usuel et que les commandes à transmettre entrent dans le cadre de ce qui peut être réalisé avec de tels boîtiers. Ils sont bien entendu susceptibles d'être nettement plus sophistiqués et par exemple de correspondre à des claviers alphanumériques analogues à ceux des ordinateurs. Ils peuvent également être constitués par des dispositifs, de type souris ou équivalent, permettant de déplacer un curseur de sélection sur l'écran du terminal auquel ils sont associés et de cliquer pour déclencher une action en relation avec un lien hypertexte au niveau duquel leur curseur de sélection a été positionné.

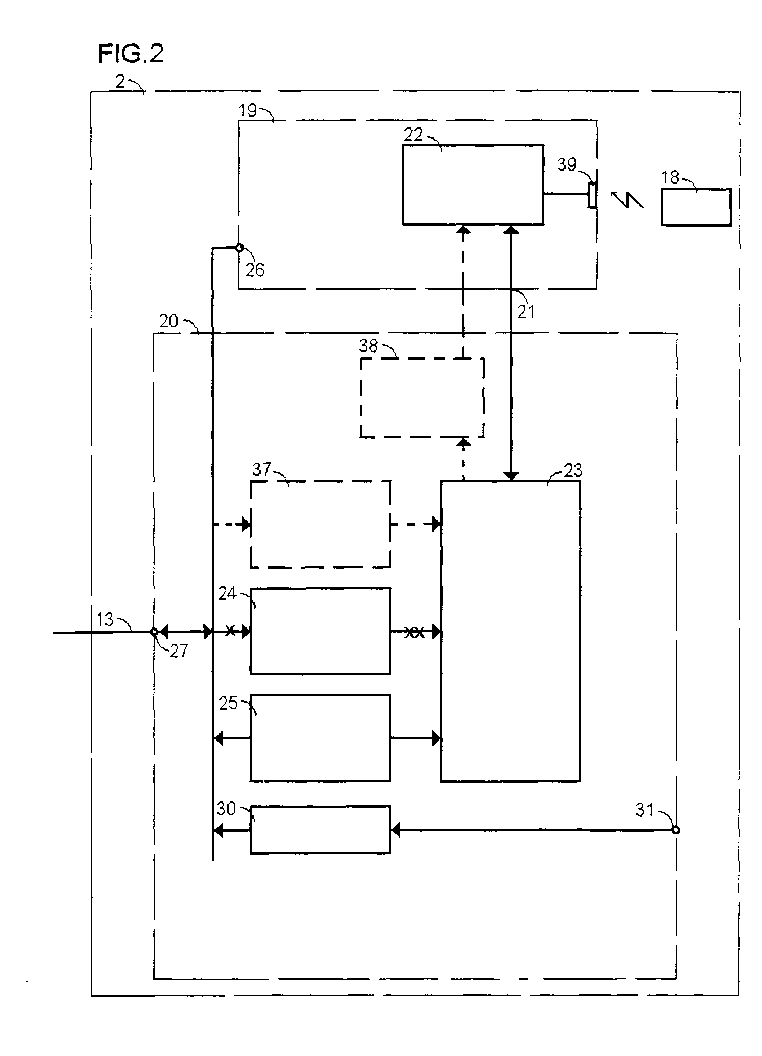

Un exemple de terminal 2 analogique organisé autour d'un appareil 19 de type téléviseur, est présenté à titre d'exemple sur la figure 2. Cet appareil est ici supposé équipé d'un dispositif d'interface homme-machine 18, de type télécommande, mis à disposition des usagers et coopérant avec un récepteur de signaux 39, du téléviseur et par exemple un récepteur de signaux infrarouges comme courant en ce domaine. Ce terminal analogique 2 est supposé équipé d'un circuit intermédiaire 20 auquel est reliée la liaison bidirectionnelle de transmission 13 desservant le terminal. Ce circuit intermédiaire permet de traiter les signaux de commande reçus du dispositif d'interface 18 en vue de leur transmission vers le module 12 relié à cette liaison, ainsi que les signaux transmis en sens inverse du module vers le terminal.

Une liaison 21 est prévue entre un processeur de commande 22 que comporte le terminal 2, soit en l'occurrence le téléviseur 19, pour le contrôle de son fonctionnement, et un processeur 23 du circuit intermédiaire 20.

Dans l'exemple de réalisation proposé et selon une technique de transmission de commande notamment décrite dans le document EP-A-410371 , le processeur 23 d'un circuit intermédiaire 20 est associé à un modulateur 24 et à un démodulateur 25 qui permettent à ce circuit intermédiaire d'émettre et de recevoir des signaux de commande, sous forme analogique, par l'intermédiaire de la liaison de transmission 13 à laquelle il est raccordé. Dans le cas d'un terminal de type téléviseur, cette liaison 13 est reliée par une extrémité à une entrée d'antenne 26 du téléviseur et à un port 27 du circuit intermédiaire 20 affecté à ce téléviseur.

Les signaux analogiques échangés via une liaison de transmission 13 sont alors transmis sous forme de modulations de porteuses. Dans un exemple non limitatif de réalisation, la fréquence de porteuse du signal reçu par le démodulateur 25 est de l'ordre de 120 MHz, alors que la fréquence de porteuse du signal provenant du modulateur 24 est de l'ordre de 20 MHz.

Lorsque chaque circuit intermédiaire est équipé d'un modulateur 24 et d'un démodulateur 25, chaque module 12 est aussi équipé d'un modulateur 28 et un démodulateur 29 correspondants pour permettre l'établissement de communications bidirectionnelles entre ce circuit et ce module.

Dans une variante de réalisation, des moyens sont prévus pour assurer une transmission de signaux qui répondent à des besoins spécifiques par la liaison de transmission 13 et par exemple une transmission de signaux obtenus à partir d'une manette pour jeux rapides qui sont supposés transmis à un port 31. A titre d'exemple non limitatif, ces moyens sont ici supposés fournis par un circuit à oscillateur contrôlé en tension 30 à destination d'un serveur de jeux, tel que le serveur 6, par l'intermédiaire de la liaison 13, du module 12 et du réseau de transmission 11.

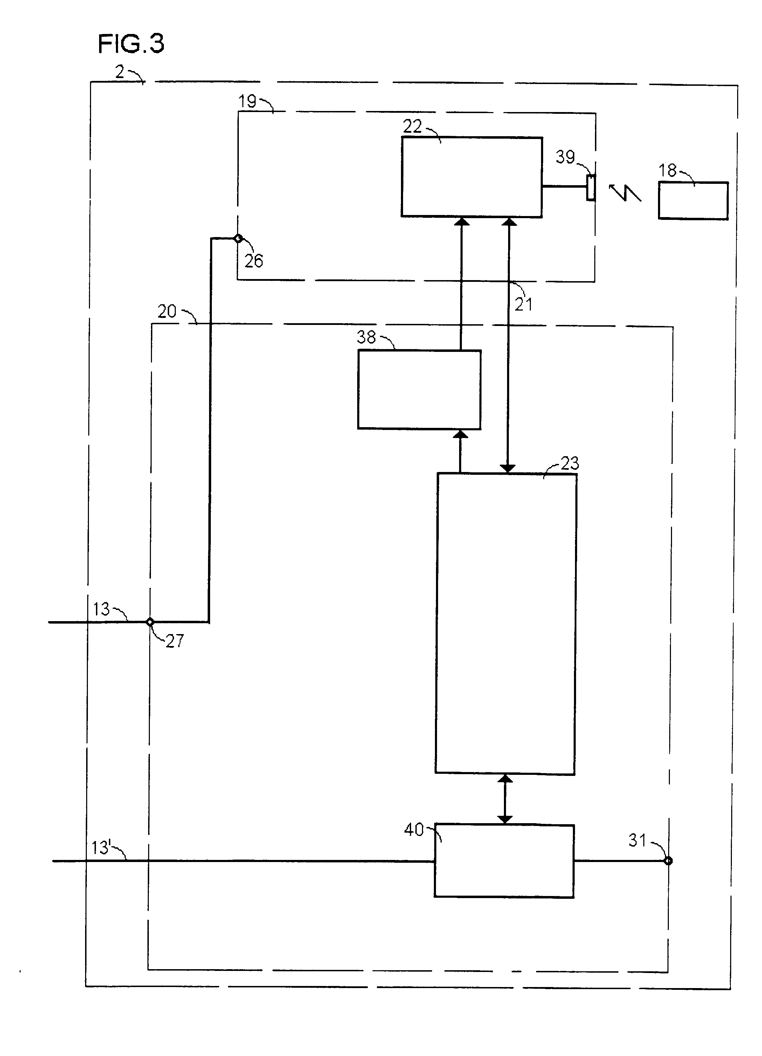

Dans une autre variante de réalisation destinée à permettre la transmission de signaux numériques entre un module 12 et le ou les terminaux 2 que ce module dessert, il est prévu des moyens d'émission et de réception spécifiques au niveau des modules et des terminaux pour une telle transmission. Dans l'exemple de réalisation proposé, un module 12 comporte un modulateur à haut débit 36 par exemple un modulateur hyperfréquence 36 - figure 4 - et chaque terminal comporte un démodulateur à haut débit 37 correspondant - figure 3 -, le démodulateur 24 n'étant alors plus nécessaire.

Un processeur graphique 38 est implanté dans le circuit intermédiaire 20 d'un terminal 2 de manière à traiter les données reçues soit par l'intermédiaire du démodulateur hyperfréquence 37, soit via le circuit d'entrée/sortie 40, en vue de leur affichage au niveau du terminal 2 avec lequel il communique par l'intermédiaire d'un port approprié, par exemple de type Péritel, de ce terminal.

Un tel arrangement permet notamment de transmettre des données d'images numérisées et par exemple des données d'images de pages HTML d'un document multimédia interactif à un terminal 2 depuis un serveur. Ce serveur est éventuellement local et par exemple réalisé au niveau d'un module 12 organisé à cette fin, il peut aussi être un serveur distant, tel que 9, dont les signaux sont transmis au travers du réseau de transmission 11 et du module 12 auquel est relié le terminal.

Selon encore une autre variante de réalisation, relative à des terminaux numériques qui est présentée en figure 3 les moyens d'émission/réception d'un terminal sont constitués par un circuit d'interface d'entrée/sortie numérique 40 pour liaison de type Ethernet, la liaison 13 entre un module 12 et le ou les terminaux 2 qu'il dessert étant alors de ce type. Le circuit intermédiaire 20 de chacun de ces terminaux est alors simplifié dans la mesure le circuit d'entrée-sortie 40 est alors connecté à un port du processeur 23 du circuit intermédiaire 20 et au processeur graphique 38 de celui-ci, via ce port.

Selon cette dernière variante, le circuit d'entrée/sortie 40 d'un terminal 2 est raccordé à la logique de traitement 14 du module 12 qui dessert ce terminal. Ce raccordement s'effectue par une liaison 13', de type ETHERNET, à laquelle sont aussi reliés les circuits d'entrée/sortie de la grappe dont fait partie le terminal 2 Cette liaison 13' permet le raccordement des terminaux 2 qu'elle dessert au réseau de transmission 11 sous la supervision de la logique de contrôle 14 du module 12 où elle se connecte pour des transmissions de signaux numériques ou numérisés.

Dans l'exemple de réalisation de module schématisé sur la figure 4, chaque module 12 a sa logique de traitement 14 reliée au réseau local de transmission 11 par l'intermédiaire d'un port 32, au répartiteur 7 par une liaison 33 et aux téléviseurs 2 qu'il dessert soit par une liaison 13 ou 13' commune, soit éventuellement par des liaisons 13 individuelles, comme déjà indiqué plus haut. Les liaisons utilisées sont ici supposées être de type filaire et en conséquence réalisées à l'aide de câbles de transmission par exemple coaxiaux, à fibres optiques, ou de type téléphonique, suivant les modes de transmission utilisés.

Les signaux parvenant du répartiteur 7 via la liaison 33 comprennent les signaux d'image et de son des divers programmes télévisés qui sont reçus par l'installation de télédistribution, via le sous-ensemble récepteur de programmes de télévision 4 ou qui sont fournis par le sous-ensemble serveur vidéo 5 ou par le sous-ensemble serveur de jeux vidéo 6. Comme il est connu ces signaux peuvent être uniquement constitués de signaux correspondant à des informations transmises sous forme analogique, ils peuvent aussi être constitués de signaux correspondant à des informations transmises sous forme numérique.

Les signaux transitant par le port 32 sont supposés correspondre à des informations transmises sous forme numérique entre les modules 12 et les sous-ensembles locaux ou éventuellement distants, reliés à eux par l'intermédiaire du réseau local de transmission 11, la logique de traitement 14 de chaque module 12 agissant comme une unité centrale de supervision et de traitement vis-à-vis des terminaux 2 auxquels elle est reliée par une liaison 13.

A cet effet, cette logique de traitement 14 d'un module 12 reçoit donc les signaux provenant du réseau local de transmission 11, via le port 32, en assure le traitement ainsi que leur mise en forme en vue de leur transmission aux terminaux 2 reliés au module, lorsqu'une telle transmission est nécessaire.

Cette mise en forme est susceptible de conduire à une transmission de signaux numériques par la logique de traitement 14 aux générateurs vidéo 15 que comporte le module, en vue de l'envoi d'informations sous forme d'images et de sons reproductibles par les terminaux 2. Les signaux produits par les générateurs vidéo 15 d'un module 12 sont ici supposés classiquement soumis à une modulation de fréquence porteuse différente pour chaque terminal par l'intermédiaire de modulateurs haute fréquence 16 individuellement affectés chacun à un générateur. Les signaux modulés produits sont transmis vers le terminal concerné, via la liaison 13 qui le dessert et au travers d'un filtre 34 centré sur la fréquence porteuse utilisée. Une interface de transmission 35 est ici supposée prévue dans chaque module 12 pour assurer les adaptations nécessaires à la transmission par une même liaison 13 des signaux provenant du répartiteur 7 par la liaison 33, des modulateurs 16 via les filtres 34 et du modulateur 28, à destination des terminaux 2 desservis par ce module, ainsi que celle des signaux émanant de ces terminaux à destination du démodulateur 29 du module.

Dans l'exemple décrit ci-dessus, les signaux échangés via une liaison 13 sont supposés être de type analogique, comme indiqué plus haut un module 12 peut aussi être prévu pour échanger des signaux sous forme numérique avec les terminaux qu'il dessert lorsque ces derniers sont prévus pour prendre en compte de tels signaux. Comme déjà supposé, les éléments d'un module 12 qui sont constitués par les générateurs vidéo 15, les modulateurs 16 et 28, les filtres 34, le démodulateur 29 et l'interface de transmission 35 d'un module sont alors remplacés par des éléments permettant la transmission d'informations sous forme numérique depuis le répartiteur 7 vers les terminaux et les échanges d'information sous forme numérique entre ces terminaux et la logique de traitement 14.

L'organisation choisie pour les grappes 17 selon laquelle l'unité logique de traitement 14 du module 12 de chaque grappe constitue une unité centrale de supervision et de traitement pour cette grappe, permet de réaliser des grappes aisément adaptables aux besoins des utilisateurs en matière de communication. Il est en effet possible de prévoir un nombre plus ou moins grand de terminaux 2 dans chaque grappe 17 en fonction des besoins notamment en matière de débit d'information et de puissance de traitement des usagers et ceci dans une même installation.

Le nombre de terminaux desservis par un module peut aisément être modifié au cours du temps par ajout ou retrait des éléments du module qui sont prévus pour une desserte individuelle des terminaux et par modification du logiciel de la logique de traitement 14 de ce module.

La mise à jour d'un tel logiciel en fonction des besoins d'exploitation est prévue pour pouvoir être réalisée au travers du réseau local de transmission 11 et à partir d'un sous-ensemble informatique de gestion 8, éventuellement distant.

Il est aussi prévu que le logiciel installé au niveau de la logique de traitement 14 d'un module 12 comporte des éléments de programme lui permettant d'afficher sélectivement sur les terminaux qu'il dessert les fenêtres ou pages interactives fournies, soit éventuellement par lui-même, soit par un des sous-ensembles serveurs, locaux ou distants, auquel il est relié par l'intermédiaire du réseau local de transmission 11.

Dans une forme de réalisation, il est ainsi prévu qu'une logique de traitement 14 stocke les éléments de programme lui permettant d'afficher des pages interactives réalisées à l'aide d'un langage descriptif, tel que par exemple le langage HTML, au niveau des terminaux 2 qu'elle dessert. Le dispositif d'interface homme-machine 18 de chacun de ces terminaux est alors équipé de moyens de commande, connus en eux-mêmes et non développés ici, lui permettant par exemple de commander le déplacement d'un curseur sur une image affichée sur l'écran du terminal et de par exemple cliquer à l'emplacement d'affichage d'un lien hypertexte pour déclencher l'opération correspondant à ce lien, via le module 12 auquel ce terminal est relié. Bien entendu, comme indiqué plus haut, des moyens de commande différents et notamment plus élaborés peuvent être utilisés. Dans une variante de réalisation éventuellement associée à la précédente, il est prévu qu'une logique de traitement stocke les éléments de programme permettant à un utilisateur averti, mais pas nécessairement spécialiste, d'effectuer des opérations de programmation, tel que par exemple au moyen du langage de programmation JAVA. Cette possibilité peut en particulier être utilisée par un utilisateur professionnel chargé de maintenir à jour des programmes évolutifs propres à une installation et notamment des programmes interactifs spécialisés destinés à être affichés au niveau de terminaux 2 au profit des utilisateurs. Les opérations d'entrée-sortie de données nécessaires à une telle programmation sont susceptibles d'être réalisées à l'aide d'un des terminaux 2 équipé de manière adéquate, lorsqu'il n'est pas prévu d'utiliser un sous-ensemble informatique de gestion 8. Le terminal 2 permettant de telles modifications est par exemple un ordinateur doté de moyens lui permettant de se connecter à une liaison 13, par exemple via un modem approprié, non représenté. Ce peut aussi être tout autre terminal doté de moyens lui permettant de communiquer avec la logique de traitement 14, via la liaison 13 ou via le réseau local de transmission 11.

Comme déjà indiqué plus haut, les terminaux 2 ne sont pas nécessairement des téléviseurs comme classiquement prévues dans les installations destinées aux hôpitaux et à l'hôtellerie. Ces terminaux peuvent être remplacés par d'autres appareils audiovisuels, tels que des bornes d'information audiovisuelle interactives dans le cas de musées, d'expositions commerciales ou autres, voire par des appareils individuels dotés de capacités audiovisuelles et de moyens leur permettant un accès à un réseau de communication et par exemple au réseau Internet.

## Revendications

1. Module interface de communication interactive pour installation de télédistribution multiservice dans laquelle des moyens audiovisuels de communication, de type terminaux, sont mis à disposition d'utilisateurs et permettent une commande interactive d'au moins une application par ces utilisateurs, tant dans le cadre de l'installation qu'éventuellement à l'extérieur de celle-ci, caractérisé en ce qu'il comporte une logique de traitement (14) qui est organisée autour d'un processeur associé à un ensemble de mémoires et qui fait fonction d'unité centrale de traitement et de supervision pour une grappe de terminaux (2) pour la mise en communication de chacun des terminaux de cette grappe d'une part, par signaux vidéo, avec au moins un sous-ensemble récepteur de programmes de télévision (4) ou serveur vidéo (5, 6) de l'installation et/ou d'autre part par signaux numériques depuis ladite logique de traitement et avec au moins un sous-ensemble serveur (5, 6, 8, 9, 10) local ou distant, au travers d'un réseau local de transmission partagé (11) de l'installation, les transmissions entre le module et les terminaux de cette grappe étant réalisées par l'intermédiaire de canaux dont "n" sont communs à tous, "n" étant un nombre positif ou éventuellement nul, et dont les autres sont dynamiquement affectés aux terminaux de la grappe.

2. Module, selon la revendication 1, dans lequel la logique de traitement (14) est associée à des moyens (28, 29) lui permettant de communiquer bidirectionnellement avec chacun des terminaux reliés au module qui la comporte, par l'intermédiaire de la liaison (13) au travers de laquelle ces terminaux reçoivent les signaux vidéo qui leur sont transmis.

3. Module, selon l'une des revendications 1 à 2, dans lequel la logique de traitement (14) est associée à des moyens (15, 16, 34) lui permettant de transmettre sous forme de signaux vidéo analogiques, à chacun des terminaux analogiques reliés au module qui la comporte, les signaux vidéo qui sont reçus sous forme numérique par ce module ou éventuellement produits sur commande par ladite logique.

4. Module, selon la revendication 3, dans lequel la logique de traitement (14) est associée à des moyens modulateurs (36) lui permettant de transmettre des signaux à haut débit à chacun des terminaux reliés au module qui la comporte et dotés de moyens complémentaires (37, 38), pour l'affichage par page de document multimédia interactif et notamment de pages de type HTML reçues ou produites par cette logique.

5. Module, selon la revendication 3, dans lequel la logique de traitement (14) est reliée à une liaison de transmission numérique, notamment de type Ethernet lui permettant de communiquer par signaux numériques et avec un haut débit avec au moins certains des terminaux qui sont reliés au module qui la comporte et qui sont dotés de moyens complémentaires (38, 40), en particulier pour l'affichage par page de document multimédia interactif et notamment de pages de type HTML reçues ou produites par cette logique.

6. Module, selon l'une des revendications 1 à 5, dans lequel la logique de commande comporte des éléments de programme permettant l'exploitation de liens hypertexte au niveau des pages interactives affichées sur les terminaux reliés au module qui la comporte ainsi que celle de pages réalisées en un langage descriptif standardisé, tel que le langage HTML, soit au niveau de cette logique, soit au niveau d'un sous-ensemble serveur (9) local ou distant relié à la logique par l'intermédiaire du réseau local de transmission (11).

7. Module selon l'une des revendications 1 à 5, dans lequel la logique de commande comporte des éléments de programme permettant l'exploitation d'un langage de programmation , tel que le langage JAVA, pour des actions réalisées au niveau du module et éventuellement d'au moins un des terminaux reliés à lui, ainsi qu'éventuellement au travers du réseau local de transmission (11).

8. Installation de télédistribution dans laquelle des moyens audiovisuels de communication, de type terminaux, sont mis à disposition d'utilisateurs et permettent une commande interactive d'au moins une application par ces utilisateurs tant dans le cadre de l'installation qu'éventuellement à l'extérieur de celle-ci, ladite installation, comportant au moins un sous-ensemble récepteur de programmes de télévision (4) ou serveur vidéo (5, 6) et un réseau local de transmission numérique (11) auquel est relié au moins un sous-ensemble serveur (5, 6, 8, 9, 10) local ou distant, et étant caractérisée en ce qu'elle comporte des terminaux de communication (2) organisés en grappes et un module interface de communication interactive par grappe, ce module incluant une logique de traitement (14) qui est organisée autour d'un processeur associé à un ensemble de mémoires et qui fait fonction d'unité centrale de traitement et de supervision pour une grappe de terminaux pour la mise en communication de chacun des terminaux de cette grappe d'une part, par signaux vidéo, avec au moins un sous-ensemble récepteur de programmes de télévision (4) ou serveur vidéo (5, 6) de l'installation et/ou d'autre part par signaux numériques depuis ladite logique de traitement et avec au moins un sous-ensemble serveur (5, 6, 8, 9, 10) local ou distant, au travers d'un réseau local de transmission partagé (11) de l'installation, les transmissions entre les modules et les terminaux que ces modules desservent dans les différentes grappes étant réalisées par l'intermédiaire de canaux dont "n" sont communs pour tous, "n" étant un nombre entier positif ou éventuellement nul, et dont les autres sont dynamiquement affectés aux terminaux module par module, les canaux affectables étant identiques dans chacune des grappes de manière à permettre une desserte d'un nombre de terminaux dont la valeur maximale correspond au produit du nombre de grappes par le nombre de canaux affectables pour un module.
